# EUROPÄISCHE PATENTANMELDUNG

(11) **EP 0 542 673 A1**
(43) Veröffentlichungstag der Anmeldung: **19.05.1993**
(21) Anmeldenummer: 92810790.3
(22) Anmeldetag: 15.10.1992
(51) Int. Cl.: B29C 33/60, B29C 53/16

(54) **Verfahren zum maschinellen Aufbringen eines Klebstoff-Profilstranges entlang dem Rand einer Glasscheibe und Vorrichtung zur Durchführung des Verfahrens**

(30) Priorität: 13.11.1991 DE 4137249
(71) Anmelder: Gurit-Essex AG, CH-8807 Freienbach (CH)
(72) Erfinder: Mena, José, CH-8180 Bülach (CH); Berger, Hermann, CH-8617 Mönchaltorf (CH); Kurth, Max, CH-8610 Uster (CH)
(74) Vertreter: Rottmann, Maximilian R.

(57) **Zusammenfassung**

Ein Klebstoff-Profilstrang (20) wird entlang dem Rand einer Glasscheibe (18), insbesondere einer Fahrzeugscheibe, durch eine mittels eines Roboters entlang dem Glasscheibenrand geführten Extrudier-Profildüse auf die Glasoberfläche aufgebracht, wobei die beiden Enden des Profilstranges aneinanderstossen. Danach werden die Endbereiche des Profilstranges maschinell an die Glasoberfläche angepresst. Das Anpressen der Endbereiche des Profilstranges sowohl aneinander als auch an die Glasoberfläche erfolgt mit einer durch ein oder mehrere Peltier-Elemente kühlund heizbar ausgerüsteten Anpresseinrichtung (10). Die Berührungsfläche wird vor der Berührung mit dem Profilstrang unterKühlung durch die Peltier-Elemente (22,26) mit einer erstarrten Flüssigkeit bedeckt. Die Peltier-Elemente werden spätestens während des Anpressvorganges zwecks Überführung der erstarrten Flüssigkeit in einen Flüssigkeitsfilm in den Heizbetrieb geschaltet. Das Abheben der Anpresseinrichtung vom Profilstrang erfolgt solange noch ein Flüssigkeitsfilm zwischen der Anpresseinrichtung und dem Profilstrang vorhanden ist. Das Verfahren und die Vorrichtung zu dessen Durchführung ermöglichen in einfachster Weise ein sauberes und schlüssiges Verbinden der Profilstrangenden miteinander.

## Beschreibung

Die Erfindung betrifft das in den Ansprüchen 1 bis 6 umschriebene Verfahren zum maschinellen Aufbringen eines Klebstoff-Profilstranges entlang dem Rand einer Glasscheibe sowie die in den Ansprüchen 7 bis 10 umschriebene Vorrichtung zur Durchführung dieses Verfahrens.

Aus der Veröffentlichung DE-C1-40 22 484 ist ein Verfahren zum maschinellen Aufbringen eines Klebstoff-Profilstranges entlang dem Rand einer Glasscheibe, insbesondere einer Fahrzeugscheibe, bekannt, bei welchem der Klebstoff durch eine mittels eines Roboters entlang dem Glasscheibenrand geführten Extrudier-Profildüse auf die Glasoberfläche angedrückt und der deformierte Anfangs- und Endteil des Profilstranges abgetrennt wird.

Bei diesem Verfahren erfolgt das Abtrennen des deformierten Profilstrangteiles vom nicht deformierten Profilstrangteil, im Bereich des Startpunktes der Extrudier-Profildüse, maschinell mittels eines quer zum Profil geführten Schnittes. Dann wird der abgetrennte deformierte Anfangsteil maschinell von der Glasoberfläche gelöst und entfernt. Danach wird im Bereich des Endpunktes der Profildüse diese von der Glasoberfläche abgehoben und der Profilstrang mittels eines zweiten, parallel zum ersten geführten Schnittes maschinell auf eine solche Länge abgeschnitten, dass die beiden Enden des Profilstranges deckungsgleich aneinanderstossen. Schliesslich wird der Endbereich des Profilstranges maschinell an die Glasoberfläche angedrückt, und die beiden Enden des Profilstranges werden maschinell aneinandergedrückt.

Dieses Verfahren weist den Nachteil auf, dass das Andrücken des Profilstranges an die Glasoberfläche berührungsfrei mittels eines Druckfluids erfolgen muss, da andernfalls der noch klebrige Profilstrang am Andrückelement haften würde. Aus diesem Grunde sind nur geringe Anpressdruck-Werte realisierbar, und die Haftung der beiden Profilstrangenden aneinander an der Nahtstelle bleibt ungenügend.

Weiter ist aus der Veröffentlichung DE-A1-39 30 414 ein Verfahren zur Montage von Glasscheiben bekannt, bei welchem eine profilierte Extruderdüse auf den Rand der Glasscheibe aufgesetzt, unter gleichmässiger Dosierung des Polymers am Rand der Glasscheibe entlanggeführt und nach Erreichen des Anfangs des extrudierten Profilstranges nach Unterbrechung der Polymerzufuhr von der Glasscheibe entfernt wird. Danach wird der Übergangsbereich von Anfang und Ende des extrudierten Profilstranges durch kalibrierte Presswerkzeuge nachgepresst.

Bei diesem Verfahren kann zwar der Anpressdruck beliebig hoch gewählt werden. Um ein Haften des Presswerkzeuges am Profilstrang zu verhindern, ist es jedoch notwendig, zwischen dem Profilstrang und dem Presswerkzeug eine Trennfolie zwischenzuschalten, welche nach dem Aushärten des Polymers wieder entfernt werden muss. Das Verfahren ist daher relativ kompliziert und aufwendig.

Aufgabe der Erfindung ist es somit, die Nachteile dieser Verfahren zu beseitigen und ein Verfahren sowie eine Vorrichtung zu schaffen, mit dem die beiden Profilstrangenden in einfacher und billiger Weise schlüssig miteinander verbunden werden können.

Diese Aufgabe wird erfindungsgemäss dadurch gelöst, dass das Anpressen der Endbereiche des Profilstranges sowohl aneinander als auch an die Glasoberfläche mit einer durch ein oder mehrere Peltier-Elemente kühl- und heizbar ausgerüsteten Anpresseinrichtung vorgenommen wird, wobei die Pressfläche vor dem Anpressen gekühlt und mit einer erstarrten Flüssigkeit bedeckt und spätestens während des Anpressens aufgeheizt wird und, solange ein Flüssigkeitsfilm zwischen der Anpresseinrichtung und dem Profilstrang vorhanden ist, die Anpresseinrichtung vom Profilstrang abgehoben wird.

Das Abheben der Anpresseinrichtung hat also zu einem Zeitpunkt zu erfolgen, wo der Flüssigkeitsfilm noch nicht verdampft oder vom Profilstrang absorbiert worden ist.

Die Umschaltung des Peltier-Elementes in den Heizbetrieb hat, wie erwähnt, spätestens während des Andrückvorganges erfolgen. Die Anpresseinrichtung kann aber auch bereits vor dem Anpressen bis zu einer Temperatur vorgeheizt werden, bei welcher an seiner Oberfläche noch feste Phase der Flüssigkeit vorhanden ist. In diesem Falle wird die Taktzeit verkürzt.

Zweckmässigerweise weist die Anpresseinrichtung ein dem Profil des Profilstranges entsprechendes Gegenprofil auf.

Die Anpresseinrichtung kann ein- oder mehrteilig ausgebildet sein, wobei im letzteren Falle zweckmässigerweise jeder Teil mit mindestens einem Peltier-Element versehen ist. Eine mindestens dreiteilige Ausbildung der Anpresseinrichtung ist dann zwingend, wenn der Profilstrang Hinterschneidungen aufweist.

Zweckmässigerweise wird die Anpresseinrichtung oder eines ihrer Teile beim Anpressen schiefwinklig zur Glasoberfläche aufgesetzt und anschliessend um eine zur Längsrichtung des Profilstranges parallele Kante gekippt. Dabei wird das überschüssige Material des Profilstranges abgequetscht, und zwar entweder an einen Ort ausserhalb der Anpresseinrichtung oder aber an einem Ort in der Anpresseinrichtung selbst, beispielsweise in eine für diesen Zweck vorgesehene Ausnehmung in der Anpresseinrichtung. Im letzeren Falle ist es dann periodisch von der Anpresseinrichtung zu entfernen.

Vorzugsweise erfolgt das Kippen der Anpresseinrichtung in Richtung der Glasscheibe, so dass das überschüssige Material des Profilstranges auf die Glasscheibe gepresst wird. In diesem Falle ist es zweckmässig, die Glasscheibe nur im Bereich des Profilstranges mit einem Primer vorzubehandeln, damit das abgepresste Material leicht von der Glasscheibe entfernt werden kann und nicht an dieser haften bleibt.

Zur Bildung der festen Phase der Flüssigkeit auf der Anpresseinrichtung wird diese zweckmässigerweise auf eine Temperatur von -20 bis -40 °C gekühlt. Zur Verkürzung der Taktzeit kann die Anpresseinrichtung vor dem Anpressen bis zu einer Temperatur vorgeheizt werden, bei welcher an ihrer Oberfläche noch feste Phase der Flüssigkeit vorhanden ist. Diese Temperaturführung erfolgt durch entsprechende Stromzufuhr zu den Peltier-Elementen.

Als Flüssigkeit kann Wasser, ein wasserhaltiges Gemisch oder eine wasserfreie Flüssigkeit eingesetzt werden.

Geeignete wasserhaltige Gemische sind beispielsweise Wasser mit darin gelösten oberflächenaktiven Substanzen, z.B. Seifenlösungen, oder Stärkelösungen, z.B. Kartoffelsaft.

Beim Einsatz von Wasser als Flüssigkeit kann dieses zur Bildung der festen Phase der Luftfeuchtigkeit entnommen werden. In allen Fällen kann aber die Anpresseinrichtung zur Bildung der festen Phase mit der Flüssigkeit besprüht oder in diese eingetaucht werden.

Es ist aber auch möglich, das Anpresseinrichtung selbst porös auszugestalten, so dass die Flüssigkeit durch diese hindurch zugeführt werden kann. Wesentlich ist in diesem Falle, dass an der Oberfläche der Anpresseinrichtung keine Tropfenbildung stattfindet. Als Materialien kommen dabei beispielsweise Sintermetall oder Leder in Frage.

Durch die erwähnten Massnahmen wird nicht nur eine schlüssige Verbindung der beiden Profilstrangenden, sondern auch ein problemloses Ablösen der Anpresseinrichtung vom Klebstoff-Profilstrang gewährleistet.

Die Temperatur der warmen Seite der Anpresseinrichtung sollte nicht mehr als 20 bis 25 °C betragen, andernfalls sollte eine Wasser- oder Luftkühlung vorgesehen werden.

Zweckmässigerweise ist die gesamte Anordnung so ausgebildet, dass der Anpressdruck der Anpresseinrichtung nicht über das Peltier-Element, sondern lediglich auf die profilseitigen Teile der Anpresseinrichtung ausgeübt wird. Dies kann in der Weise bewerkstelligt werden, dass man den Druckerzeuger an einer zwischen dem Peltier-Element und dem Profil liegenden Stelle auf die Anpresseinrichtung angreifen lässt.

Vier beispielsweise Ausführungsformen des erfindungsgemässen Verfahren werden anhand der Zeichnung erläutert, in welcher darstellen:
- Fig. 1 und 2: Schnitte durch zwei Ausführungsformen mit zweiteiliger Ausgestaltung der Anpresseinrichtung für einen Profilstrang ohne Hinterschneidungen, dessen Profil über die Glasscheibe hinausragt;
- Fig. 3: einen Schnitt durch eine Ausführungsform mit dreiteiliger Ausgestaltung der Anpresseinrichtung für einen Profilstrang mit einer Hinterschneidung, dessen Profil über die Glasscheibe hinausragt; und
- Fig. 4: einen Schnitt durch eine Ausführungsform mit einteiliger Ausgestaltung der Anpresseinrichtung für einen Profilstrang ohne Hinterschneidung, dessen Profil nicht über die Glasscheibe hinausragt.

In allen Figuren sind gleichartige Elemente mit denselben Bezugszeichen versehen.

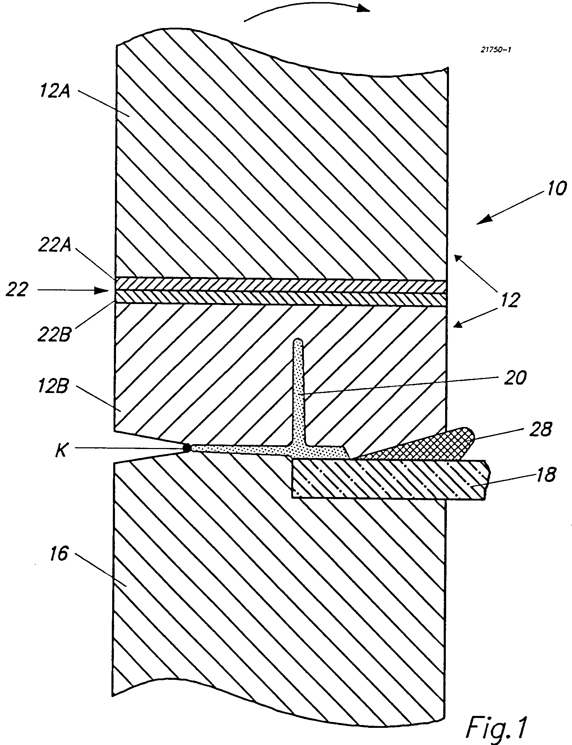

Die in Fig. 1 dargestellte Ausführungsform dient, wie erwähnt, der Bearbeitung eines Profilstranges ohne Hinterschneidungen, dessen Profil über die Glasscheibe hinausragt. Die Anpresseinrichtung 10 ist zweiteilig ausgebildet. Sie umfasst einen oberen Teil 12 und einen als Auflager ausgebildeten unteren Teil 16. Zwischen den beiden Teilen 12A und 12B des oberen Teiles 12 der Anpresseinrichtung 10 ist ein die beiden Teile 22A und 22B umfassendes Peltier-Element 22 angeordnet. Dieses wird über nicht dargestellte Anschlussdrähte mit Strom gespeist. Der untere Teil 16 der Anpresseinrichtung 10 weist kein solches Peltier-Element auf, da seine Berührungsfläche mit dem Profilstrang 20 nur klein ist, so dass ein Ablösen auch ohne besondere Temperaturführung möglich ist.

Die beiden Teile 12 und 16 der Anpresseinrichtung 10 weisen an ihren Enden ein dem Profil des auf der Glasscheibe 18 angebrachten Profilstranges 20 entsprechendes Gegenprofil auf. Die Glasscheibe 18 und der Profilstrang 20 ruhen auf dem als Auflager ausgebildeten unteren Teil 16 der Anpresseinrichtung 10. Dieser kann aber auch so ausgebildet sein, dass er nur den Profilstrang 20 stützt, während die Glasscheibe 18 auf einem separaten Auflager ruht.

Im Betrieb wird zunächst die mit dem Profilstrang 20 versehene Glasscheibe 18 auf den unteren Teil 16 der Anpresseinrichtung 10 aufgelegt. Dann wird der obere Teil 12 der Anpresseinrichtung 10 längs der Kante K, welche zur Längsrichtung des Profilstranges 20 parallel verläuft, schiefwinklig zur Glasoberfläche aufgesetzt und danach gegen die Glasscheibe 18 hin in die dargestellte Lage gekippt. Dabei wird das überschüssige Material 28 auf die Glasscheibe 18 ausgepresst. Die Temperaturführung des Teiles 12 der Anpresseinrichtung 10 erfolgt wie oben beschrieben durch entsprechende Stromzufuhr zum Peltier-Element 22.

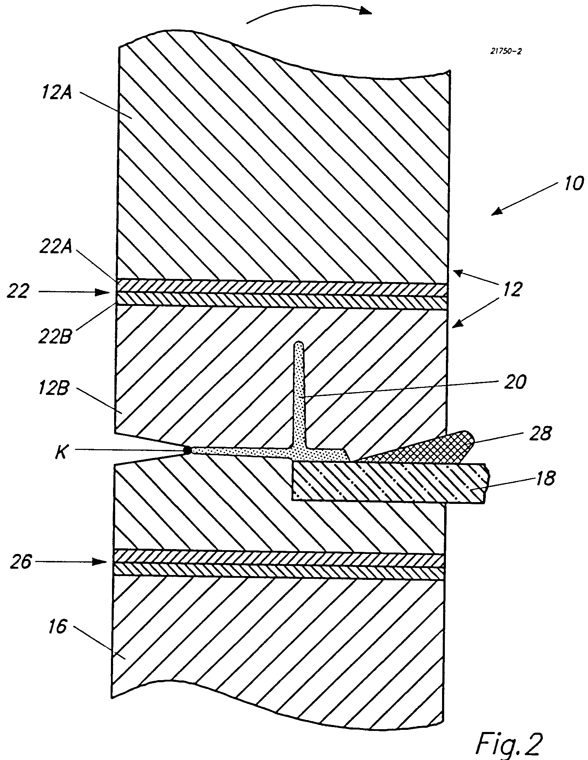

Die in Fig. 2 dargestellte verbesserte Ausführungsform dient ebenfalls der Bearbeitung eines Profilstranges ohne Hinterschneidungen, dessen Profil über die Glasscheibe hinausragt. Sie unterscheidet sich von der in Fig. 1 dargestellten Ausführungsform dadurch, dass auch der untere Teil 16 der Anpresseinrichtung 10 in gleicher Weise wie der obere Teil 12 der Anpresseinrichtung 10 mit einem Peltier-Element 26 versehen ist. Die Temperaturführung der beiden Teile 12 und 16 der Anpresseinrichtung 10 erfolgt wie oben beschrieben durch entsprechende Stromzufuhr zu den beiden Peltier-Elementen 22 und 26 simultan.

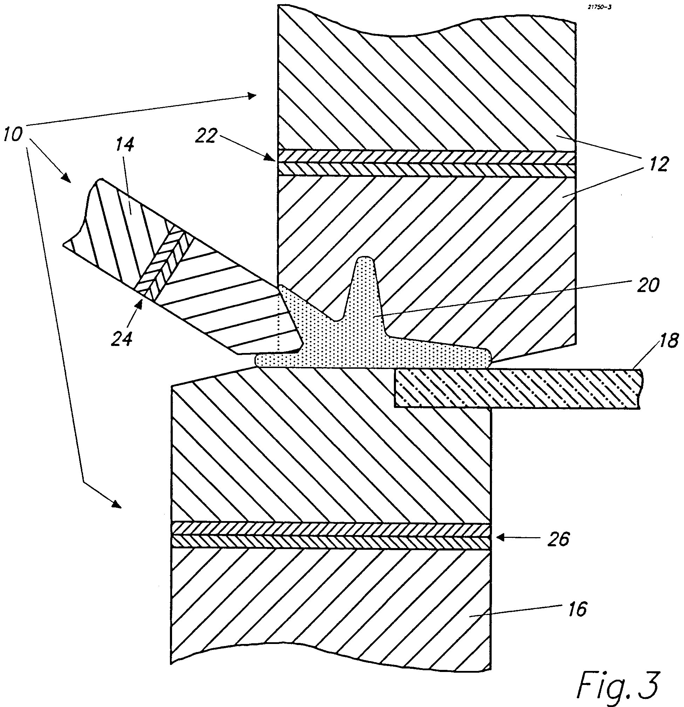

Die in Fig. 3 dargestellte Ausführungsform dient der Bearbeitung eines Profilstranges mit einer Hinterschneidung. Bei ihr ist die Anpresseinrichtung 10 dreiteilig ausgebildet. Sie umfasst zwei voneinander unabhängige obere Teile 12 und 14 sowie einen als Auflager ausgebildeten unteren Teil 16. Alle drei Teile 12, 14 und 16 der Anpresseinrichtung 10 sind mit Peltier-Elementen 22, 24 und 26 versehen. Die Temperaturführung aller drei Teile 12, 14 und 16 der Anpresseinrichtung 10 erfolgt in gleicher Weise wie oben beschrieben durch entsprechende Stromzufuhr zu den drei Peltier-Elementen 22, 24 und 26 simultan.

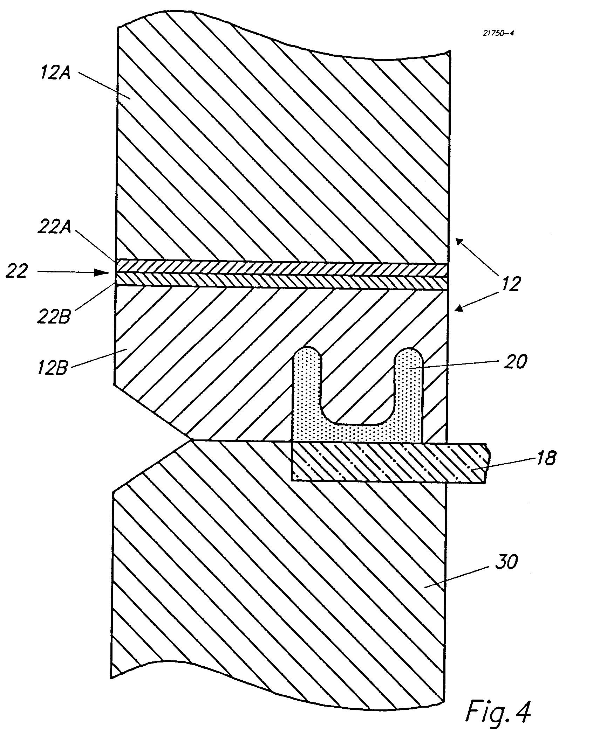

Die in Fig. 4 dargestellte Ausführungsform dient der Bearbeitung eines Profilstranges ohne Hinterschneidung, dessen Profil nicht über die Glasscheibe hinausragt. Die Anpresseinrichtung ist einteilig ausgebildet und weist nur einen oberen Teil 12 auf. Die Glasscheibe 18 ruht auf dem Auflager 30. Die Temperaturführung des Teiles 12 der Anpresseinrichtung 10 erfolgt in gleicher Weise wie oben beschrieben durch entsprechende Stromzufuhr zum Peltier-Element 22.

Bei den in den Figuren dargestellten Ausführungsformen liegt die Glasscheibe 18 waagrecht mit dem Profilstrang 20 nach oben. Die Bearbeitung kann aber ebensogut an einer senkrecht, d.h. hochkant, stehenden Glasscheibe durchgeführt werden. In besonderen Fällen kann es auch sinnvoll sein, die Bearbeitung an einer waagrecht gelagerten Glasscheibe mit nach unten gerichtetem Profilstrang durchzuführen.

## Patentansprüche

1. Verfahren zum maschinellen Aufbringen eines Klebstoff-Profilstranges entlang dem Rand einer Glasscheibe, insbesondere einer Fahrzeugscheibe, bei welchem der Klebstoff durch eine mittels eines Roboters entlang dem Glasscheibenrand geführten Extrudier-Profildüse auf die Glasoberfläche aufgebracht wird, wobei die beiden Enden des Profilstranges aneinanderstossen und die Endbereiche des Profilstranges maschinell an die Glasoberfläche angepresst werden, dadurch gekennzeichnet, dass das Anpressen der Endbereiche des Profilstranges (20) sowohl aneinander als auch an die Glasoberfläche (18) mit einer durch ein oder mehrere Peltier-Elemente (22, 24, 26) kühl- und heizbar ausgerüsteten Anpressvorrichtung (10) vorgenommen wird, wobei die Pressfläche vor dem Anpressen gekühlt und mit einer erstarrten Flüssigkeit bedeckt und spätestens während des Anpressens aufgeheizt wird und, solange ein Flüssigkeitsfilm zwischen der Anpresseinrichtung (10) und dem Profilstrang (20) vorhanden ist, die Anpresseinrichtung (10) vom Profilstrang (20) abgehoben wird.

2. Verfahren nach Anspruch 1, dadurch gekennzeichnet, dass die Anpressvorrichtung (10) beim Anpressen schiefwinklig zur Glasoberfläche aufgesetzt und anschliessend um eine zur Längsrichtung des Profilstranges (20) parallele Kante (K) gekippt wird, wobei das überschüssige Material (28) des Profilstranges (20) abgequetscht wird.

3. Verfahren nach Anspruch 1 oder 2, dadurch gekennzeichnet, dass die Anpressvorrichtung (10) zum Erstarren der Flüssigkeit auf eine Temperatur von -20 bis -40 °C gekühlt wird.

4. Verfahren nach einem der Ansprüche 1 bis 3, dadurch gekennzeichnet, dass als Flüssigkeit Wasser, ein wasserhaltiges Gemisch oder eine wasserfreie Flüssigkeit eingesetzt wird.

5. Verfahren nach Anspruch 4, dadurch gekennzeichnet, dass die Flüssigkeit durch Sprühen aufgebracht wird.

6. Verfahren nach Anspruch 4, dadurch gekennzeichnet, dass die Flüssigkeit durch Eintauchen aufgebracht wird.

7. Vorrichtung zur Durchführung des Verfahrens nach Anspruch 1, gekennzeichnet durch eine Anpresseinrichtung (10) zum Anpressen der Endbereiche des Profilstranges (20) aneinander und an die Glasoberfläche (18), bei welcher die Pressfläche mit einem oder mehreren Peltier-Elementen (22, 24, 26) kühl- und heizbar ist.

8. Vorrichtung nach Anspruch 7, dadurch gekennzeichnet, dass die Anpresseinrichtung (10) ein dem Profil des Profilstranges (20) entsprechendes Gegenprofil aufweist.

9. Vorrichtung nach Anspruch 7 oder 8, dadurch gekennzeichnet, dass die Anpresseinrichtung (10) einteilig (12) ausgebildet ist.

10. Vorrichtung nach Anspruch 7 oder 8, dadurch gekennzeichnet, dass die Anpresseinrichtung (10) mehrteilig (12, 14, 16) ausgebildet ist.

11. Vorrichtung nach einem der Ansprüche 7 bis 10, dadurch gekennzeichnet, dass die Anpresseinrichtung (10) porös ausgebildet ist, so dass die Flüssigkeit durch diese hindurch zugeführt werden kann.
